# FASCICULE DE BREVET EUROPEEN

(11) **EP 1 319 035 B1**
(45) Date de publication et mention de la délivrance du brevet: **09.11.2005**
(21) Numéro de dépôt: 01969909.9
(22) Date de dépôt: 17.09.2001
(51) Int. Cl.: C08G 18/70, C09D 175/04

(54) **PROCEDE POUR CONFERER A DES SUBSTRATS EN BOIS UNE RESISTANCE ELEVEE A L'ATTAQUE DES PRODUITS CHIMIQUES**
BEHANDLUNGSVERFAHREN EINES HOLZSUBSTRATES ZUR ERHÖHUNG DER CHEMIKALIENBESTÄNDIGKEIT
METHOD FOR PROVIDING WOODEN SUBSTRATES WITH HIGH RESISTANCE AGAINST ATTACK FROM CHEMICAL PRODUCTS

(30) Priorité: 18.09.2000 FR 0011884
(43) Date de publication de la demande: 18.06.2003
(73) Titulaire: RHODIA CHIMIE, 92512 Boulogne Billancourt Cedex (FR)
(72) Inventeur: GRANIER, Vincent, F-94130 Nogent-Sur-Marne (FR); WUSTMANN, Uwe, 40668 Meerbusch (DE)
(74) Mandataire: Colombet, Alain André
(86) Numéro de dépôt international: PCT/FR2001/002884
(87) Numéro de publication internationale: WO 2002/022703

(56) Documents cités:
- WO-A-99/10402
- DE-A- 19 724 199
- FR-A- 2 760 242

## Description

L'invention concerne un procédé destiné à conférer à des substrats en bois ou ayant une surface en bois un revêtement présentant une résistance élevée à l'attaque des produits chimiques.

L'invention a plus particulièrement pour objet la réalisation de revêtements présentant les propriétés énumérées ci-dessus sur des surfaces en bois d'intérieur, notamment à usage domestique ou public tels les parquets, portes, murs, plinthes, meubles ou équipement intérieur de véhicules automobiles.

Les surfaces en bois font l'objet d'attaques chimiques multiples et doivent être protégées par l'application d'un revêtement peinture ou vernis.

Au titre des agents chimiques détériorant l'aspect des surfaces en bois d'intérieur, on peut citer en particulier les produits d'entretien, notamment les détergents utilisés pour le nettoyage de ces surfaces, les produits gras et également certains aliments comme le café, la moutarde, le vinaigre, le lait ou le vin, en particulier le vin rouge.

Parmi les produits gras détériorant l'aspect des surfaces en bois, on peut citer notamment les crèmes cosmétiques et les écrans solaires qui, lorsqu'ils viennent au contact des surfaces en bois, généralement de façon accidentelle, laissent à la surface de celles-ci des traces, taches ou voiles qui sont très difficiles à éliminer, y compris lorsque ces surfaces comportent un revêtement protecteur, tel qu'un vernis.

Pour protéger les surfaces en bois, il est connu de les revêtir avec des peintures ou vernis de type polyuréthane.

Ces revêtements sont formés en appliquant à la surface à protéger une composition comprenant un polyol et un durcisseur isocyanate, dont les fonctions isocyanates réagissent avec les fonctions hydroxyles du polyol pour former un réseau polyuréthane.

En raison de la sensibilité du bois à la chaleur, les revêtements obtenus sont séchés à température ambiante, voire à une température plus élevée, mais ne dépassant pas 60°C.

A cet effet, il est nécessaire de mettre en oeuvre des systèmes dits "2K" pour deux composants, la résine polyol faisant partie du premier composant et l'isocyanate du deuxième composant.

Les deux composants sont mélangés peu de temps avant l'application de la composition, afin d'éviter la formation d'un réseau avant l'application du revêtement.

Le polyol ainsi que le durcisseur peuvent être en solution, suspension ou émulsion.

En raison de l'évolution des législations relatives à l'usage de solvants organiques volatils, notamment à usage domestique, et également en raison de préoccupations environnementales, la tendance actuelle est d'éviter l'utilisation de solvants organiques et d'appliquer aux surfaces à traiter des émulsions aqueuses contenant le polyol, auxquelles est additionné, avant emploi, le durcisseur.

L'un des problèmes majeurs rencontrés avec le type d'émulsion de l'invention est la difficulté d'incorporation manuelle du durcisseur à l'émulsion aqueuse de polyol en raison des différences de viscosité entre la composition d'isocyanate et le polyol.

En effet, pour les applications de revêtement sur des surfaces domestiques, le composant isocyanate et le composant polyol sont généralement mélangés avant application par l'utilisateur de façon manuelle sans recours à des dispositifs de mélange mécanique.

En raison de l'hydrophobicité du composant isocyanate, il est en général nécessaire de conférer à celui-ci des propriétés hydrophilisantes ou d'avoir recours à des équipements spéciaux exerçant des forces de cisaillement élevé pour introduire le composant isocyanate hydrophobe dans la phase aqueuse.

Une autre solution est de modifier le (poly)isocyanate afin de le rendre hydrophile et donc dispersible ou auto-émulsionnable dans l'eau.

Le document US 5,252,696 propose à cet effet de greffer des groupes polyéther hydrophile sur le polyisocyanate par réaction d'un groupe hydroxyle du polyéther avec la fonction NCO du polyisocyanate.

Toutefois, les revêtements obtenus avec des émulsions aqueuses de polyol et d'isocyanate(s) ne présentent généralement qu'une médiocre résistance insuffisante à l'attaque des produits chimiques.

Un but de la présente invention est de mettre à disposition un procédé pour conférer à un substrat ayant une surface en bois un revêtement de type polyuréthane, à partir d'une composition d'isocyanate(s) non bloquée ou présentant un faible taux de blocage, agissant en tant que durcisseur, qui peut être incorporée sans difficulté dans une émulsion aqueuse de polyol, en particulier de façon manuelle.

Un but de l'invention est en particulier de fournir un procédé du type décrit ci-dessus à partir d'une composition d'isocyanate(s) qui peut être incorporée sans difficulté dans une émulsion aqueuse de polyol et sans qu'il soit nécessaire d'abaisser la viscosité de la composition d'isocyanate(s) par incorporation de proportions importantes de solvant organique.

Un autre but de l'invention est de mettre à disposition un procédé du type décrit ci-dessus à partir d'une composition d'isocyanate(s) non masquée, ou faiblement masquée, qui, après incorporation dans une émulsion aqueuse de polyol et application sur le substrat présentant une surface en bois permet l'obtention d'un revêtement ayant une dureté élevée.

Un autre but encore est de fournir un procédé du type décrit ci-dessus à partir d'une composition d'isocyanate(s) du type mentionné plus haut dans lequel le revêtement présente un bon aspect de surface.

L'invention a également pour but de mettre à disposition un procédé du type décrit ci-dessus à partir d'une composition d'isocyanate(s) présentant une résistance élevée à l'attaque des produits chimiques.

WO 97/31 960 décrit une composition à base d'isocyanate autodispersible, en phase aqueuse, utile pour l'application de peintures et de vernis.

Ce document mentionne l'application de ce type d'isocyanate pour le revêtement de plaques d'acier par réalisation d'un film polyuréthane.

De manière générale, les utilisations de durcisseurs de ce type sont les revêtements de carrosseries automobiles ou de structures en acier extérieures, telles que ponts, charpentes métalliques, etc.

Les travaux des inventeurs à l'origine de la présente invention ont permis de découvrir que les compositions d'isocyanates telles que décrites dans WO/97/31 960 donnaient de façon surprenante, lorsqu'elles étaient appliquées sur des surfaces en bois, d'excellents résultats, notamment une dureté élevée ainsi qu'une résistance élevée à l'attaque des produits chimiques.

L'invention a pour objet un procédé pour conférer à un substrat comprenant une surface en bois un revêtement ayant des propriétés de dureté et de résistance à l'attaque de produits chimiques élevées, caractérisé par les étapes consistant à :
a) ajouter à une suspension aqueuse d'un polyol une composition à base d'isocyanate(s) et un agent tensioactif anionique présentant une partie hydrophile comprenant un groupement anionique et une partie lipophile comprenant un radical hydrocarboné, ledit tensioactif comportant également un fragment de chaîne polyéthylène et/ou polypropylène glycol d'au moins 1, avantageusement d'au moins 5, de préférence au moins 7 unités éthylényloxyles et/ou propylényloxyles, et ladite composition d'isocyanate(s) ne comportant pas plus de 30 % en masse d'agent tensioactif sous forme liée à une fonction isocyanate, pour former une émulsion d'isocyanate(s) et de polyol dans l'eau ;
b) appliquer ledit mélange à la surface en bois dudit substrat ;
c) laisser le(s)dit(s) isocyanate(s) réagir avec ledit polyol pour former un revêtement polyuréthane.

L'agent tensioactif peut être présent dans la composition polyol, dans la composition (poly)isocyanate ou être ajouté à la suspension aqueuse du polyol en même temps que la composition isocyanate.

Toutefois, on préfère que l'agent tensioactif soit présent dans la composition à base d'isocyanate(s).

Avantageusement, le tensioactif est choisi de manière à ce qu'il ne comporte pas de fonction réactive avec le (poly)isocyanate de manière à être présent dans la suspension sous forme essentiellement libre, par opposition à une forme liée par l'intermédiaire d'une liaison chimique avec le (poly)isocyanate.

Par "forme essentiellement libre", on signifie que moins de 30 %, avantageusement moins de 20 %, de préférence moins de 10 % en masse de l'agent tensioactif est sous forme liée.

Selon un mode de réalisation préféré, l'agent tensioactif anionique présente au moins une fonction choisie parmi les sulfates ou phosphates d'aryle(s) et/ou d'alcoyle(s), les aryl- ou alcoyl-phosphonates, - phosphinates et sulfonates.

De préférence, l'agent tensioactif anionique comporte une partie hydrophile formée de ladite fonction anionique, dudit fragment de chaîne polyéthylène glycol et/ou polypropylène glycol et d'une partie lipophile à base d'un radical hydrocarboné.

La partie lipophile est de préférence choisie parmi les groupes alcoyles et aryles, de préférence en C₆-C₃₀.

On préfère tout particulièrement un agent tensioactif anionique répondant à la formule suivante : 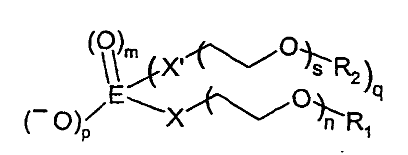 dans laquelle :
- q représente zéro ou 1 ;
- p représente un entier égal à 1 ou à 2 ;
- m représente zéro ou un nombre entier égal à 1 ou à 2 ;
- X et X', semblables ou différents, représente un bras comportant au plus deux chaînons carbonés ;
- s est zéro ou un entier entre 1 et 30 avantageusement entre 5 et 25, de préférence entre 9 et 20 (intervalles fermés c'est-à-dire comprenant les bornes);
- n est zéro ou un entier choisi entre 1 et 30 avantageusement entre 5 et 25, de préférence entre 9 et 20 (intervalles fermés c'est-à-dire comprenant les bornes) ;
- E est un élément choisi parmi le phosphore et le soufre ;
- R₁ et R₂, semblables ou différents, représentent un radical hydrocarboné, avantageusement choisi parmi les aryles en C₆-C₃₀ et les alcoyles en C₁-C₂₀ éventuellement substitués, avantageusement alcoyles en C₁₀-C₂₀ éventuellement substitués.

Quoique cela ne fasse pas partie des composés préférés, il convient de noter que s et/ou n peuvent être égaux à zéro, avec la condition que E est phosphore et que lorsque s et n sont égaux à zéro, respectivement R₁ et/ou R₂ sont alcoyles de C₈ à C₁₂, avantageusement ramifiés, ou aralcoyles de C₁₂ à C₁₆ ou alcoylaryles de C₁₀ à C₁₄.

L'un des radicaux divalents X et X' peut aussi être un radical de type ([EOₘ (O⁻)ₚ]) de manière à former des pyroacides comme les diesters symétriques ou non de l'acide pyrophosphorique.

Le nombre total de carbone des composés anioniques visés par la présente invention est avantageusement d'au plus environ 100, de préférence au plus environ 50.

Les radicaux divalent X et éventuellement X' sont avantageusement choisis parmi les radicaux divalents suivants (la partie gauche de la formule étant liée à E) :
- quand E est P, un des X ou X' peut être O-P(O)(O⁻)-X"- ;
- quand E est P, un des X ou X' peut-être -O-(R₁₀-O)P(O)-X"; R₁₀ représentant un reste hydrocarboné de C₂ à C₃₀, comprenant une ou plusieurs unités éthylényloxyles ou propylényloxyles, avantageusement au moins 5, de préférence au moins 7 unités éthylényloxyles ou propylényloxyles et X" représentant un atome d'oxygène ou une simple liaison ;
- une liaison directe entre E et le premier éthylène dudit fragment de chaîne polyéthylène glycol ;
- un méthylène éventuellement substitué et dans ce cas avantageusement fonctionnalisé en partie ;
- un bras de structure -Y-, -D-Y-, -Y-D-, -Y-D-Y', dans lequel
   → Y et Y' identiques ou différents représentent un chalcogène, avantageusement choisi parmi les plus légers à savoir le soufre et surtout l'oxygène, les éléments métalloïdes des rangs atomiques au plus égal à celui du phosphore et appartenant à la colonne VB sous la forme de dérivés d'amines ou de phosphines tertiaires, le radical assurant le caractère tertiaire étant avantageusement d'au plus 4 atomes de carbone, de préférence d'au plus 2 atomes de carbone ;
   → D représente un alcoylène éventuellement substitué, y compris fonctionnalisé, D étant avantageusement éthylène ou méthylène, de préférence éthylène dans les structures -D-Y- et surtout -Y-D-Y', et méthylène dans les structures -Y-D- ;

Lorsque E représente le phosphore, la formule (I) devient la formule (II) : 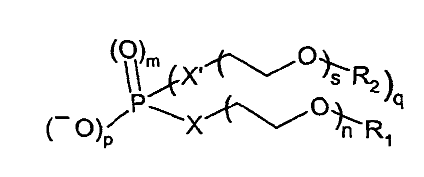 qui, lorsque q est zéro, devient : 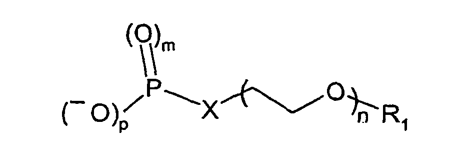 dans lesquelles
- p représente zéro ou un nombre entier égal à 1 ou à 2 ;
- m représente zéro ou un nombre entier égal à 1 ou à 2 ;
- la somme p + m + q est au plus égale à trois ;
- la somme 1 + p + 2m + q est égale à trois ou à cinq ;
- X et X', semblables ou différents, représentent un bras comportant au plus deux chaînons carbonés ;
- n représente un nombre entier entre 5 et 30, avantageusement entre 5 et 25, de préférence entre 9 et 20 (intervalles fermés c'est-à-dire comprenant les bornes) ;
- R₁ et R₂, semblables ou différents, représentent un radical hydrocarboné, avantageusement choisi parmi les aryles et les alcoyles tels que définis précédemment éventuellement substitués notamment par atome d'halogène, de préférence fluor.

Dans les formules qui précèdent, les groupes éthylèneoxyles peuvent être en partie remplacés par des groupes propylèneoxyles.

Il est toutefois souhaitable dans ce cas, que les composés comprennent majoritairement des groupes éthylèneoxyles.

La classification périodique des éléments utilisée dans la présente demande est celle du supplément au Bulletin de la Société Chimique de France, janvier 1966, n° 1.

La fonctionnalisation éventuelle des alcoylènes et notamment méthylènes (X et X') est faite par des fonctions hydrophiles (amines tertiaires et autres fonctions anioniques y compris celles qui sont décrites ci-dessus [EOₘ (O⁻)ₚ]).

Le contre-cation est avantageusement monovalent et est choisi parmi les cations minéraux et les cations organiques avantageusement non nucléophiles de nature quatemaire ou tertiaire, notamment les "oniums" de la colonne V tels que phosphonium, ammonium, ou de la colonne VI tels que sulfonium,..... et leurs mélanges. On préfère les contre-cations de type ammonium, issus d'une amine, avantageusement tertiaire. On préfère en outre éviter que le cation organique présente un hydrogène réactif avec la fonction isocyanate.

Les cations minéraux peuvent être séquestrés par des agents de transfert de phases comme les éthers couronnes.

Le pKa des cations organiques ou minéraux est avantageusement compris entre 8 et 12.

Les cations et notamment les amines correspondant aux ammoniums ne présentent avantageusement pas de propriété tensioactive mais il est souhaitable qu'elles présentent une bonne solubilité en tout cas suffisante pour assurer celle desdits composés comportant une fonction anionique et avantageusement un fragment de chaîne polyéthylène glycol, en phase aqueuse et ce à la concentration d'emploi. Les amines tertiaires présentant au plus 12 atomes, avantageusement au plus 10 atomes, de préférence au plus 8 atomes de carbone par fonction "onium" sont préférées. Les amines peuvent comporter d'autres fonctions et notamment les fonctions correspondant aux fonctions des acides aminés et des fonctions éther cyclique comme la N-méthylmorpholine, ou non. Ces autres fonctions sont avantageusement sous une forme qui ne réagit pas avec les fonctions isocyanates et n'altèrent pas significativement la solubilité en phase aqueuse.

Une amine préférée est la triéthylamine.

Il est très souhaitable que les composés anioniques selon la présente invention soient sous une forme neutralisée de sorte que le pH induit lors d'une dissolution ou d'une mise en contact dans l'eau soit au moins égal à 3, avantageusement à 4, de préférence à 5 et au plus égal à 12, avantageusement à 11, de préférence à 10.

Lorsque E est phosphore, il est souhaitable d'utiliser des mélanges de monoester et de diester dans un rapport molaire compris entre 1/10 et 10, avantageusement entre 1/4 et 4. De tels mélanges peuvent en outre comporter de 1 % jusqu'à environ 20 %, mais de manière préférée pas plus de 10 % en masse d'acide phosphorique, et de 0 à 5 % d'esters de l'acide pyrophosphorique. L'acide phosphorique est avantageusement salifié, au moins en partie, de manière à être dans les zones de pH préconisées.

Dans les mono- et diesters, une partie des groupes éthylèneoxyles peut être remplacée par des groupes propylèneoxyles. On préfère néanmoins que les groupes éthylèneoxyles soient majoritaires.

Le (poly)isocyanate selon l'invention consiste en tout isocyanate et (poly)isocyanate. Les (poly)isocyanates préférés sont choisis parmi les produits d'homo- ou d'hétéro-condensation d'alcoylènediisocyanates, comprenant notamment des produits du type "BIURET" et du type "TRIMERES", voire "PREPOLYMERES" à fonction isocyanates comportant notamment des fonctions urée, uréthane, allophanate, ester amide, et parmi les mélanges en contenant.

Il peut s'agir, par exemple, des polyisocyanates commercialisés par la Société RHODIA, France sous la dénomination "TOLONATE".

De manière générale, les polyisocyanates préférés sont les produits d'homo- ou d'hétéro-condensation des isocyanates monomères suivants :
- 1,6-hexaméthylène diisocyanate,
- 1,12-dodécane diisocyanate,
- cyclobutane 1,3-diisocyanate,
- cyclohexane 1,3 et/ou 1,4-diisocyanate,
- 1-isocyanato 3,3,5-triméthyl-5-diisocyanato-méthyl cyclohexane (isophorone diisocyanate), IPDI),
- 2,4 et/ou 2,6-hexahydrotoluylène diisocyanate,
- hexahydro 1,3- et/ou 1,4-phénylène diisocyanate,
- perhydro 2,4'- et/ou 4,4'-diphénylméthane diisocyanate,
- 1,3-et/ou 1,4-phénylène diisocyanate,
- 2,4- et/ou 2,6-toluylène diisocyanate,
- diphényiméthane 2,4'- et/ou 4,4'-diisocyanate,
- isocyanato (4)-méthyl octylène, diisocyanate (LTI ou NTI),
- triphénylméthane 4,4',4"-triisocyanate,
- 1,3-bisisocyanatométhyl cyclohexane,
- bis-isocyanato méthyl norbomane (NBDI),
- 2-méthyl-pentaméthylène diisocyanate.
   Il n'est pas nécessaire d'ajouter un solvant organique à la composition isocyanate comprenant l'agent tensioactif.

Toutefois, pour abaisser la viscosité de la composition ou pour améliorer les propriétés optiques du film, une certaine quantité de solvant organique peut être ajoutée.

Il est néanmoins préférable que la composition contient au plus 50 %, avantageusement au plus 40 %, plus préférentiellement au plus 35 % en masse de solvant organique par rapport à la masse de la totalité des isocyanates, suivant la nature du polyol auquel la composition est destinée à être ajoutée.

En ce qui concerne les solvants appropriés, on peut citer le méthoxypropylacétate, l'acétate de butyle, le propylènediméthylglycol, par exemple vendu sous la dénomination PROGLYDE DMM® de Dow, ou encore les cétones, le propylèneglycoldiacétate, l'éthyl-3-éthoxypropionate, le butyléthylèneglycolacétate.

Le rapport massique entre les isocyanates et l'agent tensioactif anionique est le plus souvent au plus égal à 1/3 avantageusement au plus égal à 20 %, de préférence à 10 %.

Le rapport massique entre les isocyanates et l'agent tensioactif est avantageusement supérieur à 1 %, de préférence à 2 %.

Il est également souhaitable que la quantité dudit ou desdits agents tensioactifs corresponde à une valeur comprise entre 10⁻² et 1, avantageusement entre 5.10⁻² et 0,5 atome de E par litre.

Ainsi le rapport massique entre les isocyanates et ledit agent tensioactif est avantageusement au moins égal à 2 %, de préférence à 4 %, et au plus égal à environ 20 %, de préférence à environ 10 %, ainsi ce rapport massique est avantageusement compris entre et environ 20 %, de préférence entre 4 et environ 10 %.

Selon la présente invention, ledit agent tensioactif peut-être utilisé seul, ou en mélange avec un ou plusieurs agents tensioactifs. Ces derniers peuvent être des agents répondant aussi à l'obligation ci-dessus de comporter une fonction anionique et avantageusement un fragment de chaîne polyéthylène glycol de préférence d'au moins 5 unités éthylènyloxyles.

Ces éventuels agents tensioactifs peuvent également être choisis parmi d'autres composés ioniques et parmi les composés non-ioniques ceux bloqués en bout de chaîne ou non. Toutefois, les composés non ioniques présentant des fonctions alcooliques sur au moins l'une des chaînes semblent avoir un effet légèrement défavorable sur l'(auto)émulsion même si ils ont un effet favorable sur d'autres aspects de la composition pour peinture ; compte tenu de cela il est préférable que la teneur en ce type de composé représentent au plus un tiers, avantageusement au plus un cinquième, de préférence au plus un dixième en masse desdits composés anioniques selon l'invention.

Le rapport massique entre les composés tensioactifs, ledit composé anionique défini précédemment et les isocyanates est très préférablement compris entre 4 et environ 10 %.

La composition peut comporter en outre un catalyseur avantageusement latent (libérable par action des agents extérieurs, par exemple rayonnement visible ou U.V., oxygène).

Le polyol est en milieu aqueux sous forme hydrosoluble ou hydrodispersable.

Il peut s'agir d'une solution aqueuse qui peut notamment être obtenue après neutralisation des groupements ioniques ou d'une émulsion du polymère dans l'eau ou d'une dispersion de type latex.

La composition (poly)isocayanate contenant le cas échéant l'agent tensioactif tel que défini dans la présente invention est ajoutée à l'émulsion aqueuse de polyol de manière avantageuse manuellement en agitant le mélange à l'aide d'une spatule.

Cette mise en émulsion est avantageusement menée à une température inférieure à 50°C, de préférence à température ambiante. Il est souhaitable de réaliser, si nécessaire, un ajustement du pH pour atteindre une valeur au moins égale à 3 et au plus égale à 11, de préférence comprise entre 4 et 10, lors de la mise en émulsion.

Selon une variante avantageuse de la présente invention, les pigments, notamment le bioxyde de titane sont dispersés dans le(les) polyol(s) avant l'addition de l'isocyanate.

Selon une mise en oeuvre préférée de la présente invention, après mise en dispersion ou émulsion, la somme des constituants dans l'eau varie de 30 à 70 % en masse par rapport à la totalité de la composition.

Toutefois, au cours de l'étude qui a mené à la présente invention, en particulier dans le cas des isocyanates aliphatiques, il a été montré qu'il y avait un risque d'emballement de diverses réactions lorsque certaines proportions d'eau était atteinte, Aussi est-il avisé d'éviter des compositions où le rapport massique entre d'une part la quantité d'eau et d'autre part la somme de l'isocyanate et du tensioactif selon l'invention dans la phase aqueuse, est compris entre 10⁻² et un demi. Si l'on désire plus de sûreté on évitera les rapports compris entre 10⁻³ et 1.

Le polyol utilisé dans le cadre de l'invention est un polymère qui contient au moins deux groupes hydroxyles (phénol ou alcool) ayant avantageusement un taux d'hydroxyle entre 0,5 et 5, avantageusement entre 1 et 3 % en masse de résine.

Ces polyols peuvent être de nature acrylique, polyester, polyuréthane, alkyde ou encore hybride, notamment polyester-uréthane et acrylique-uréthane.

On a constaté de façon surprenante, que les excellentes propriétés de résistance chimique obtenues avec la composition isocyanate de l'invention étaient observées, quelle que soit la nature de polyol envisagé, alors que généralement les propriétés d'un revêtement sont fonctions du couple polyisocyanate/polyol.

Un polyol préféré est une dispersion de polyuréthane aliphatique modifié par un acide gras commercialisé par la société ALBERDINGK BOLEY sous la dénomination ALBERDINGK CUR 99®.

Un autre polyol est une dispersion polyester polyuréthane commercialisé par la société ALBERDINGK sous la dénomination ALBERDINGK U915®.

D'autres polyols ayant donné de bons résultats sont :
- le polyol PRIMAL E-3275® de la société ROHM & HAAS,
- le polyol ALBERDINGK AC 31® de la société ALBERDINGK,
- le polyol ALBERDINGK CUR 60® de la société ALBERDINGK.

Le rapport molaire entre les fonctions isocyanates libres et les fonctions hydroxyles est compris entre 0,5 et 2,5, avantageusement entre 0,8 et 1,6, de préférence entre 1 et 1,4.

La suspension ou l'émulsion aqueuse de polyol à laquelle sont ajoutés la composition (poly)isocyanate et l'agent tensioactif tel que défini précédemment est, après homogénéisation, appliquée sur le substrat à revêtir.

Il est souhaitable d'appliquer la suspension ou l'émulsion après une période n'excédant pas quelques heures, avantageusement quatre heures, après l'addition du (poly)isocyanate, à l'émulsion aqueuse de polyol.

Le mélange est appliqué par tout moyen connu, traditionnellement utilisé pour les surfaces en bois, en particulier les surfaces domestiques, notamment au rouleau, au pinceau, à la brosse, voire au pistolet à air comprimé pour certaines applications particulières.

On préfère en général appliquer plusieurs couches, avantageusement deux ou trois couches sur le substrat à revêtir.

Avantageusement, le revêtement est appliqué sur une épaisseur, après séchage, comprise entre 5 et 150 µm, avantageusement entre 30 et 100 µm. Il est généralement préféré de sécher le revêtement après application à une température de 20 à 60°C pendant une durée pouvant aller de 15 minutes à 48 heures.

Quelle que soit la nature du polyol, le revêtement obtenu après séchage, notamment peinture ou vernis, présente une excellente dureté ainsi qu'une résistance élevée à l'attaque des produits chimiques, cosmétiques et alimentaires.

Ainsi, les caractéristiques de résistance chimique sont particulièrement élevées pour des solvants tels que le dibutylphtalate, l'alcool éthylique, l'acétone, des produits alimentaires fortement colorés tels que le café, le vin rouge, la moutarde ou encore des produits gras tels que les crèmes cosmétiques.

Les propriétés de dureté et de résistance chimique sont observées pour des bois variés, notamment les pin, sapin, épicéa, frêne, érable, acajou, hêtre, etc.

Les exemples présentés ci-après illustrent l'invention.

Pour la compréhension de ceux-ci, on se référera aux figures 1 à 4 annexées dans lesquelles :
- la figure 1 représente les résultats de dureté obtenus en mettant en oeuvre une composition polyisocyanate selon l'invention ;
- la figure 2 représente les résultats de résistance chimique pour une composition polyisocyanate selon l'invention ;
- la figure 3 représente les résultats de dureté obtenus en mettant en oeuvre une autre composition polyisocyanate selon l'invention ;
- la figure 4 représente les résultats de résistance chimique obtenus en mettant en oeuvre une autre composition polyisocyanate selon l'invention.

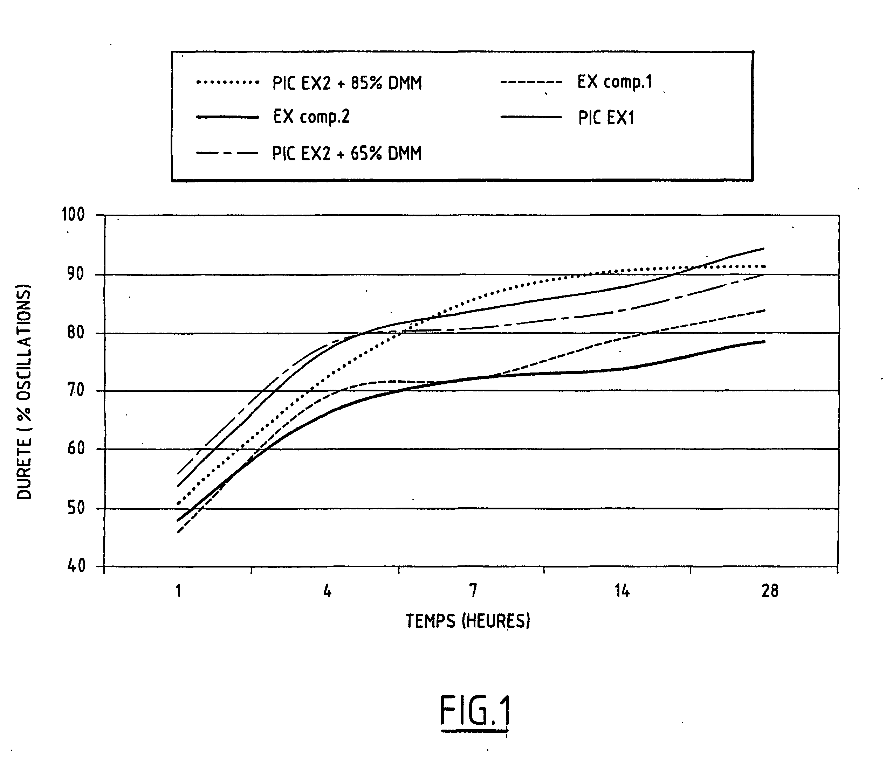

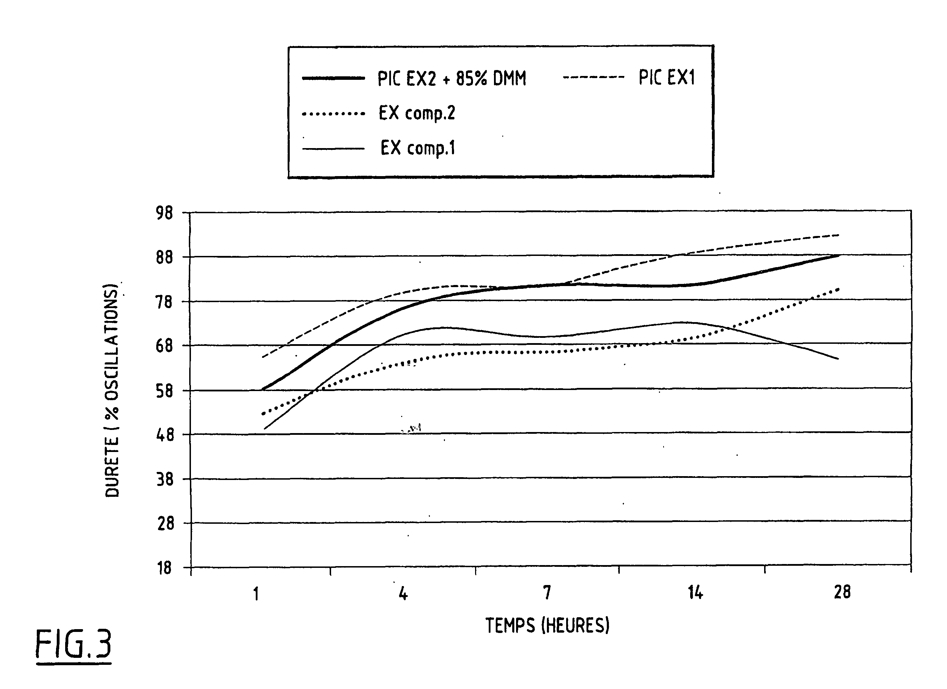

La dureté est mesurée en dureté KÖNIG après une durée de vie en pot d'une heure, le revêtement étant appliqué sur une épaisseur de 30 µm pour la figure 1 et 40 µm pour la figure 3, sur une plaque de verre à l'aide d'un tire-film.

Les propriétés de résistance chimique sont mesurées sur les revêtement appliqués sur un substrat en pin de Sibérie, immédiatement après mélange des composants (isocyanate et polyol). L'évaluation est faite selon une notation de 0 à 5 (norme DIN 68 861, la note 0 équivalent à des performances excellentes et la note 5 à des performances médiocres). Les produits testés sont le vin rouge, le café soluble, la crème NIVEA®, l'eau, le lait concentré, le dibutylphtalate, l'acétone, la moutarde et l'alcool éthylique à 48 % en volume.

Le Rhodafac® RE610 est un mélange de mono- et de diesters phosphorique selon la formule II, la formule moyenne de son radical hydrocarboné est un nonylphénol polyéthoxylé (-dix fois). Le rapport molaire entre mono ester et diester est de environ 1 (arrondi mathématique). De même le Rhodafac® PA17 présente comme produit selon la présente invention un mélange de mono- et de diesters phosphorique selon la formule II, la formule moyenne de son radical hydrocarboné est un nonylphénol polyéthoxylé (-cinq-six fois).

### EXEMPLE 1 :

### Préparation d'une composition (poly)isocyanate selon l'invention

On mélange 165g de tolonate® HDT (oligomère isocyanurate à base de trimère) avec 24 g d'acétate de butyle et 13g de Rhodafac® RE610 (mélange de mono- et de diesters phosphorique selon la formule Il) et 3 g de triéthylamine. Ce mélange est agité à l'aide d'une pale cadre ou défloculeuse pendant 5 minutes à 100 tours/minute. Ce mélange a une viscosité de 0,84 Pa.s à 20°C et une coloration inférieure à 100 APHA.

### EXEMPLE 2 :

Le mélange est fait avec 92 g de Tolonate® HDT et 10 g de Rhodofac RE610 et 2,3 g de triéthytamine. La viscosité de ce mélange est de 5,2 Pa.s. à 20°C et la coloration inférieure à 100 APHA.

### EXEMPLE 3 :

### Exemples d'application

On prépare une suspension aqueuse de polyol (composant 1) ayant la composition suivante (dans l'ordre d'addition des composants) :

| | |
|---|---|
| Alberdingk U 915® (37,1 %) | 39,1 |
| Butylglycol | 2,7 |
| Butyldiglycol | 2,7 |
| Eau | 7,75 |
| Byk® 028 | 1,1 |
| Byk® 346 | 0,15 |
| Acrysol® RM 8 | 1 |
| Acrysol® RM 1020 | 0,5 |
| Alberdingk® U 915 (37,1 %) | 45 |
| ***Total*** | 100 |

On prépare un mélange de la composition de l'exemple 3 avec la composition isocyanate de l'exemple 1 ou 2 et deux compositions isocyanates de l'état de la technique (exemples comparatifs) pour obtenir les compositions finales suivantes :

| Durcisseur | 1 | 3 | 4 | 5 | 6 |
|---|---|---|---|---|---|
| Composition ex. 2 | 85 | | | | 65 |
| Composé de l'état de la technique 1 * | | 85 | | | |
| Composé de l'état de la technique 2** | | | 65 | | |
| Composition ex. 1 | | | | 100 | |
| Proglyde DMM® | 15 | 15 | 35 | | 35 |
| Quantité composant 1 (% en masse) | 9 | 9 | 10 | 9 | 10 |

| | | | | | |
|---|---|---|---|---|---|
| * oligomère isocyanurate comportant environ 100 % de tensioactif comprenant une chaîne polyéther greffée sur la fonction isocyanate | | | | | |
| ** oligomère isocyanurate comportant environ 100 % de tensioactif comprenant une chaîne polyéther greffée sur la fonction isocyanate | | | | | |

On applique les mélanges obtenus sur un substrat en bois (pin de Sibérie) en trois couches successives de 30 µm d'épaisseur chacune (après séchage).

On évalue pour chaque revêtement la dureté König et la résistance à l'attaque de différents produits chimiques, cosmétiques ou alimentaires selon la norme DIN 68861.

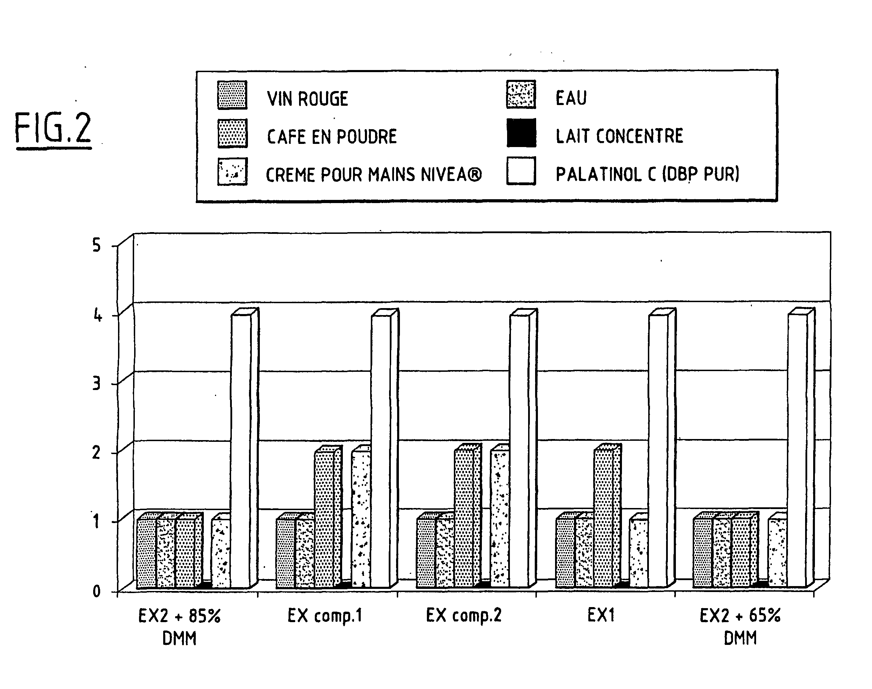

Les résultats sont représentés à la figure 1 (dureté) et la figure 2 (résistance chimique).

### EXEMPLE 5 :

### Exemples d'application

On prépare une suspension aqueuse de polyol (composant 1) ayant la composition suivante (dans l'ordre d'addition des ingrédients) :

| | |
|---|---|
| Alberdingk CUR 99® (34,7 %) | 30 |
| Worlee WO 604 N | 0,5 |
| Dowanol DPM | 2 |
| Ethyldiglycol | 3 |
| Eau | 6 |
| Byk® 333 | 0,2 |
| Byk® 346 | 0,3 |
| Acrysol® RM 2020 | 0,5 |
| Alberdingk® CUR 99 (34,7 %) | 57,5 |
| ***Total*** | 100 |

On prépare un mélange de la composition de l'exemple 3 avec la composition isocyanate de l'exemple 1 ou 2 et deux compositions isocyanates de l'état de la technique (exemples comparatifs) pour obtenir les compositions finales suivantes :

| Durcisseur | 1 | 3 | 4 | 6 |
|---|---|---|---|---|
| Composition ex. 2 | 85 | | | |
| Composé de l'état de la technique 1 * | | 85 | | |
| Composé de-l'état de la technique 2** | | | 65 | |
| Composé ex. 1 | | | | 100 |
| Proglyde DMM® | 15 | 15 | 35 | |
| Quantité composant 1 (% en masse) | 9 | 9 | 10 | 9 |

| | | | | |
|---|---|---|---|---|
| * oligomère isocyanurate comportant environ 100 % de tensioactif comprenant une chaîne polyéther greffée sur la fonction isocyanate | | | | |
| ** oligomère isocyanurate comportant environ 100 % de tensioactif comprenant une chaîne polyéther greffée sur la fonction isocyanate | | | | |

On applique les mélanges obtenus sur un substrat en bois (pin de Sibérie) en trois couches successives de 30 µm d'épaisseur chacune (après séchage).

On évalue pour chaque revêtement la dureté König et la résistance à différents produits anioniques, cosmétiques ou alimentaires selon la norme DIN 68861.

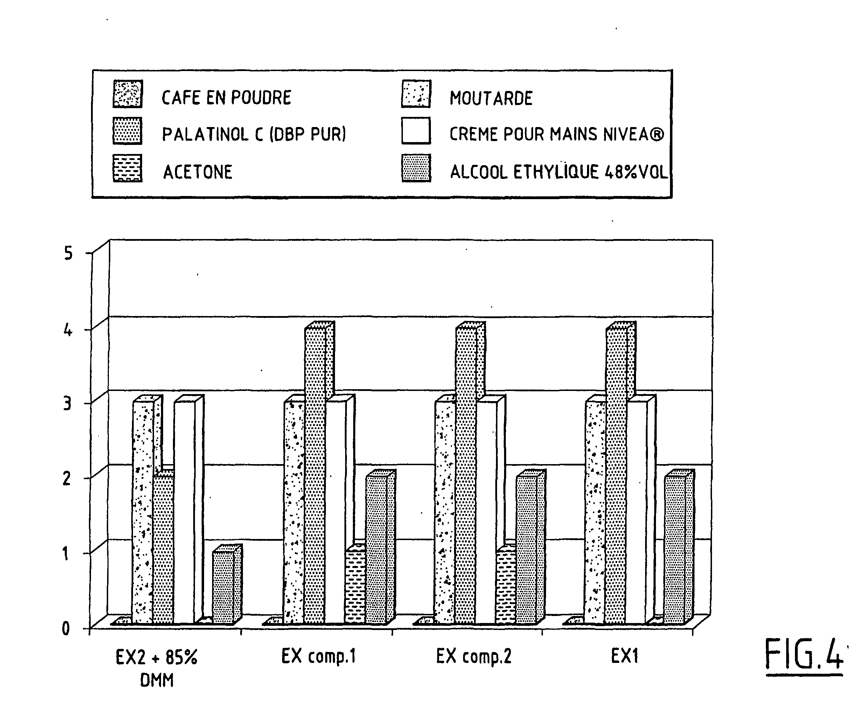

Les résultats sont représentés à la figure 3 (dureté) et à la figure 4 (résistance chimique).

Dans tous les cas, la dureté finale du revêtement obtenu est plus élevée pour les compositions isocyanates de l'invention que pour les compositions isocyanates des revêtements de l'invention de l'état de la technique.

La résistance chimique est améliorée d'un facteur de 1 à 2 par rapport aux revêtements obtenus avec des compositions polyisocyanates de l'état de la technique.

## Revendications

1. Procédé pour conférer à un substrat comprenant une surface en bois un revêtement ayant des propriétés de résistance élevées à l'attaque de produits chimiques, **caractérisé par** les étapes consistant à :
a) ajouter à une suspension aqueuse d'un polyol une composition à base d'isocyanate(s) et un agent tensioactif anionique présentant une partie hydrophile comprenant un groupement anionique et une partie lipophile comprenant un radical hydrocarboné, ledit tensioactif comportant également un fragment de chaîne polyéthylène et/ou polypropylène glycol d'au moins 1, avantageusement d'au moins 5, de préférence au moins 7 unités éthylényloxyles et/ou propylényloxyles, et ladite composition d'isocyanate(s) ne comportant pas plus de 30 % en masse d'agent tensioactif sous forme liée à une fonction isocyanate, pour former une émulsion d'isocyanate(s) dans l'eau ;
b) appliquer ledit mélange à la surface en bois dudit substrat ;
c) laisser le(s)dit(s) isocyanate(s) réagir avec ledit polyol pour former un revêtement polyuréthane.

2. Procédé selon la revendication 1, **caractérisé en ce que** l'agent tensioactif anionique est présent dans la composition à base d'isocyanate(s).

3. Procédé selon la revendication 1, **caractérisé en ce que** ladite composition d'isocyanate(s) ne comporte pas plus de 20 % en masse de tensioactif sous forme liée à une fonction isocyanate.

4. Procédé selon la revendication 1, **caractérisé en ce que** ladite composition d'isocyanate(s) ne comporte pas plus de 10 % en masse de tensioactif sous forme liée à une fonction isocyanate.

5. Procédé selon la revendication 1, **caractérisé par le fait que** ledit agent tensioactif anionique présente au moins une fonction choisie parmi les sulfates ou phosphates d'aryle(s) et/ou d'alcoyle(s), les aryl- ou alcoyl-phosphonate, -phosphinate ou sulfonate.

6. Procédé selon la revendication 1, **caractérisé par le fait que** ladite partie lipophile de l'agent tensioactif est choisie parmi les groupes alcoyles et aryles.

7. Procédé selon la revendication 1, **caractérisé par le fait que** la fraction anionique de l'agent tensioactif répond à la formule suivante : 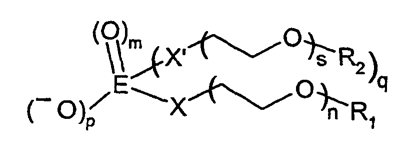 où q représente zéro ou 1 ;
où p représente un entier entre 1 et 2 (intervalles fermés c'est-à-dire comprenant les bornes) ;
où m représente zéro ou un entier entre 1 et 2 (intervalles fermés c'est-à-dire comprenant les bornes) ;
où X et X', semblables ou différents, représente un bras comportant au plus deux chaînons carbonés ;
où s est zéro ou un entier choisi entre 1 et 30 avantageusement entre 5 et 25, de préférence entre 9 et 20 ;
où n est zéro ou un entier choisi entre 1 et 30 avantageusement entre 5 et 25, de préférence entre 9 et 20 ;
où E est un élément choisi parmi le phosphore et le soufre ;
où R₁ et R₂, semblables ou différents, représentent un radical hydrocarboné, avantageusement choisi parmi les aryles et les alcoyles éventuellement substitués ;
le contrecation étant choisi parmi les cations minéraux métalliques ou organiques.

8. Procédé selon la revendication 7, **caractérisé en ce que** le contre-cation est un cation ammonium provenant d'une amine tertiaire.

9. Procédé selon la revendication 8, **caractérisé en ce que** l'amine tertiaire est la triéthylamine.

10. Procédé selon la revendication 1, **caractérisé en ce que** l'agent tensioactif qui consiste en un mélange de mono- et de di-esters de l'acide phosphorique nonylphénolpolyéthoxylé comportant dix motifs éthylényloxyles.

11. Procédé selon la revendication 1, **caractérisé en ce que** le rapport massique entre les isocyanates et l'agent tensioactif anionique est au plus égal à 1/3, avantageusement au plus égal à 20 %, de préférence à 10 %, et supérieur à 1 %, avantageusement à 2 %.

12. Procédé selon la revendication 7, **caractérisé en ce que** la quantité dudit(desdits) agent(s) tensioactif(s) correspond à une valeur comprise entre 10⁻² et 1 atomes de E par litre.

13. Procédé selon la revendication 1, **caractérisé en ce que** la composition polyisocyanate comprenant l'agent tensioactif est ajoutée manuellement à une émulsion de polyol.

14. Procédé selon la revendication 1, **caractérisé en ce que** le polyol est une dispersion polyester polyuréthane.

15. Procédé selon la revendication 1, **caractérisé en ce que** le (poly)isocyanate est choisi parmi les produits d'homo- ou d'hétéro-condensation d'alcoylène diisocyanates.

16. Procédé selon la revendication 1, **caractérisé en ce que** le rapport molaire entre les fonctions isocyanates libres et les fonctions hydroxyles du polyol est compris entre 0,5 et 2,5, avantageusement entre 0,8 et 1,6, de préférence entre 1 et 1,4.

17. Procédé selon l'une quelconque des revendications précédentes, **caractérisé en ce que** le revêtement est appliqué sur une épaisseur après séchage comprise entre 5 et 150 µm, avantageusement entre 30 et 100 µm.

18. Procédé selon l'une quelconque des revendications précédentes, **caractérisé en ce qu'**il comporte une étape de séchage de 20 à 60°C pendant une durée pouvant aller de 15 minutes à 48 heures.

## Patentansprüche

1. Verfahren, um auf einem eine Holzoberfläche umfassenden Substrat eine Beschichtung mit erhöhter Beständigkeit gegen den Angriff chemischer Mittel aufzubringen, das **gekennzeichnet ist durch** die Stufen, die aus dem
a) Zugeben einer Zusammensetzung auf der Basis von Isocyanat(en) und eines anionischen Tensids, das einen hydrophilen Teil aufweist, der eine anionische Gruppe umfasst, und einen lipophilen Teil aufweist, der einen Kohlenwasserstoffrest umfasst, zu einer wässrigen Polyolsuspension, wobei das Tensid auch ein Polyethylen- und/oder Polypropylenglykolkettenfragment mit mindestens 1, vorteilhafterweise mindestens 5, und vorzugsweise mindestens 7 Ethoxy- und/oder Propoxyeinheiten umfasst und die Isocyanatzusammensetzung nicht mehr als 30 Gew.-% Tensid in an eine Isocyanatfunktion gebundener Form enthält, um eine Isocyanatemulsion in Wasser zu bilden,
b) Aufbringen des Gemischs auf die Holzoberfläche des Substrats und
c) Umsetzen des (der) Isocyanate(s) mit dem Polyol, um eine Polyurethanbeschichtung zu bilden,
bestehen.

2. Verfahren nach Anspruch 1, **dadurch gekennzeichnet, dass** das anionische Tensid in der Zusammensetzung auf der Basis von Isocyanat(en) vorliegt.

3. Verfahren nach Anspruch 1, **dadurch gekennzeichnet, dass** die Isocyanatzusammensetzung nicht mehr als 20 Gew.-% Tensid in der an eine Isocyanatfunktion gebundenen Form enthält.

4. Verfahren nach Anspruch 1, **dadurch gekennzeichnet, dass** die Isocyanatzusammensetzung nicht mehr als 10 Gew.-% Tensid in der an eine Isocyanatfunktion gebundenen Form enthält.

5. Verfahren nach Anspruch 1, **dadurch gekennzeichnet, dass** das anionische Tensid mindestens eine Funktion besitzt, die aus Aryl- und/oder Alkylsulfaten oder -phospaten und Aryl- oder Alkylphosphonat, -phosphinat oder -sulfonat ausgewählt ist.

6. Verfahren nach Anspruch 1, **dadurch gekennzeichnet, dass** der lipophile Teil des Tensids aus Alkyl- und Arylgruppen ausgewählt ist,

7. Verfahren nach Anspruch 1, **dadurch gekennzeichnet, dass** der anionische Teil des Tensids der Formel 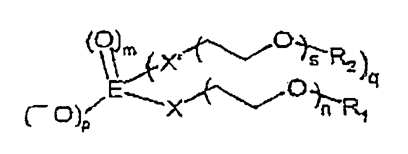 entspricht, wobei
- q 0 oder 1,
- p eine ganze Zahl von 1 bis 2 und
- m 0 oder eine ganze Zahl von 1 bis 2 bedeutet und
- X und X' gleich oder voneinander verschieden sind und ein Bindeglied bedeuten, das höchstens zwei Kohlenstoffkettenglieder umfasst, und
- s 0 oder eine ganze Zahl von 1 bis 30, vorteilhafterweise 5 bis 25, und vorzugsweise 9 bis 20,
- n 0 oder eine ganze Zahl von 1 bis 30, vorteilhafterweise 5 bis 25, und vorzugsweise 9 bis 20 und
- E ein Element, das aus Phosphor und Schwefel ausgewählt ist, bedeutet und
- R₁ und R₂ gleich oder voneinander verschieden sind und einen Kohlenwasserstoffrest, der vorteilhafterweise aus gegebenenfalls substituierten Aryl- und Alkylresten ausgewählt ist, bedeuten und
- das Gegenkation aus einem anorganischen, metallischen oder organischen Kation ausgewählt ist.

8. Verfahren nach Anspruch 7, **dadurch gekennzeichnet, dass** das Gegenkation ein Ammoniumkation ist, das von einem tertiären Amin abgeleitet ist.

9. Verfahren nach Anspruch 8, **dadurch gekennzeichnet, dass** das tertiäre Amin Triethylamin ist.

10. Verfahren nach Anspruch 1, **dadurch gekennzeichnet, dass** das Tensid aus einem Gemisch aus Mono- und Diestern der nonylphenolpolyethoxylierten Phosphorsäure, die zehn Ethoxygrundeinheiten enthält, besteht.

11. Verfahren nach Anspruch 1, **dadurch gekennzeichnet, dass** das Masseverhältnis von Isocyanaten zu anionischem Tensid höchstens 1/3, vorteilhafterweise höchstens 20 % und vorzugsweise 10 % und über 1 % und vorteilhafterweise über 2 % beträgt.

12. Verfahren nach Anspruch 7, **dadurch gekennzeichnet, dass** die Menge des (der) Tenside(s) einem Wert von 10⁻² bis 1 E-Atom pro Liter entspricht .

13. Verfahren nach Anspruch 1, **dadurch gekennzeichnet, dass** die Polycyanatzusammensetzung, die das Tensid enthält, zu einer Polyolemulsion manuell zugegeben wird.

14. Verfahren nach Anspruch 1, **dadurch gekennzeichnet, dass** das Polyol eine Polyesterpolyurethandispersion ist.

15. Verfahren nach Anspruch 1, **dadurch gekennzeichnet, dass** das (Poly-)Isocyanat aus Produkten der Homo- oder Heterokondensation von Alkylendiisocyanaten ausgewählt ist.

16. Verfahren nach Anspruch 1, **dadurch gekennzeichnet, dass** das Molverhältnis von freien Isocyanatfunktionen zu Hydroxyfunktionen des Polyols 0,5 bis 2,5, vorteilhafterweise zwischen 0,8 und 1,6, und vorzugsweise zwischen 1 und 1,4 beträgt.

17. Verfahren nach einem der vorhergehenden Ansprüche, **dadurch gekennzeichnet, dass** die Beschichtung mit einer Dicke aufgebracht wird, die nach dem Trocknen 5 bis 150 µm und vorteilhafterweise zwischen 30 und 100 µm beträgt.

18. Verfahren nach einem der vorhergehenden Ansprüche, **dadurch gekennzeichnet, dass** es eine Trocknungsstufe bei 20 bis 60 °C umfasst, die 15 Minuten bis 48 Stunden lang dauern kann.

## Claims

1. A process for providing a coating having elevated resistance to chemical attack on a substrate comprising a wooden surface, **characterised by** the steps consisting of:
a) adding to an aqueous polyol suspension a composition based on isocyanate(s) and an anionic surfactant having a hydrophilic moiety comprising an anionic group and a lipophilic moiety comprising a hydrocarbon residue, said surfactant also comprising a fragment of a polyethylene and/or polypropylene glycol chain with at least 1, advantageously at least 5, preferably at least 7 ethylene oxide and/or propylene oxide unite, and said isocyanate composition comprising no more than 30% by weight of surfactant in a form bound to an isocyanate function, to form an emulsion of isocyanate(s) in water;
b) applying said mixture onto the wooden surface of said substrate;
c) allowing said isocyanate(s) to react with said polyol to form a polyurethane coating.

2. A process according to claim 1, **characterised in that** the anionic surfactant is present in the composition based on isocyanate(s).

3. A process according to claim 1, **characterised in that** said isocyanate composition comprises no more than 20% by weight of surfactant in a form bound to an isocyanate function.

4. A process according to claim 1, **characterised in that** said isocyanate composition comprises no more than 10% by weight of surfactant in a form bound to an isocyanate function.

5. A process according to claim 1, **characterised in that** said anionic surfactant comprises at least one function selected from among aryl and/or alkyl sulfates or phosphates, aryl or alkyl phosphonates, phosphinates or sulfonates.

6. A process according to claim 1, **characterised in that** said lipophilic moiety of the surfactant is selected from among alkyl and aryl groups.

7. A process according to claim 1, **characterised in that** the anionic fraction of the surfactant satisfies the following formula: 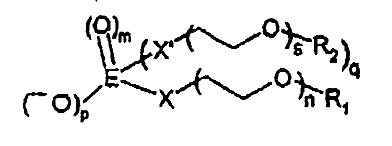 where q represents zero or 1; where p represents an integer between 1 and 2 (inclusive ranges, i.e. including the limits);
where m represents zero or an integer between 1 and 2 (inclusive ranges i.e. including the limits);
where X and X', identical or different, represents an arm comprising at most two carbon chain links;
where s is zero or an integer selected between 1 and 30, advantageously between 5 and 25, preferably between 9 and 20;
where n is zero or an integer selected between 1 and 30, advantageously between 5 and 25, preferably between 9 and 20;
where E is an element selected from among phosphorus and sulfur;
where R₁ and R₂, identical or different, represent a hydrocarbon residue, advantageously selected from among optionally substituted aryls and alkyls; the countercation being selected from among metallic inorganic or organic cations.

8. A process according to claim 7, **characterised in that** the countercation is an ammonium cation originating from a tertiary amine.

9. A process according to claim 8, **characterised in that** the tertiary amine is triethylamine.

10. A process according to claim 1, **characterised in that** the surfactant consists of a mixture of polyethoxylated nonylphenol phosphoric acid mono- and diesters comprising ten ethylene oxide units.

11. A process according to claim 1, **characterised in that** the mass ratio between the isocyanates and the anionic surfactant is at most equal to 1/3, advantageously at most equal to 20%, preferably to 10%, and greater than 1%, advantageously than 2%.

12. A process according to claim 7, **characterised in that** the quantity of said surfactant(s) corresponds to a value of between 10⁻² and 1 atoms of E per litre.

13. A process according to claim 1, **characterised in that** the polyisocyanate composition comprising the surfactant is added manually to a polyol emulsion.

14. A process according to claim 1, **characterised in that** the polyol is a polyester polyurethane dispersion.

15. A process according to claim 1, **characterised in that** the (poly)isocyanate is selected from among homo- or heterocondensation products of alkylene diisocyanates.

16. A process according to claim 1, **characterised in that** the molar ratio between the free isocyanate functions and the hydroxyl functions of the polyol is between 0.5 and 2.5, advantageously between 0.8 and 1.6, preferably between 1 and 1.4.

17. A process according to any one of the preceding claims, **characterised in that** the coating is applied to a dry film thickness of between 5 and 150 µm, advantageously between 30 and 100 µm.

18. A process according to any one of the preceding claims, **characterised in that** it comprises a drying step at 20 to 60°C for a period which may range from 15 minutes to 48 hours.
